# EUROPÄISCHE PATENTSCHRIFT

(11) **EP 1 239 355 B1**
(45) Veröffentlichungstag und Bekanntmachung des Hinweises auf die Patenterteilung: **13.12.2006**
(21) Anmeldenummer: 02004600.9
(22) Anmeldetag: 28.02.2002
(51) Int. Cl.: G05D 1/02

(54) **Fahrerassistenzvorrichtung und Fahrerassistenzverfahren zur Assistenz eines Fahrers beim Fahren eines Fahrzeugs**
Method and device for assisting a driver of a vehicle
Dispositif et procédé d'assistance au conducteur d'un véhicule

(30) Priorität: 09.03.2001 DE 10111283
(43) Veröffentlichungstag der Anmeldung: 11.09.2002
(73) Patentinhaber: AUDI AG, 85045 Ingolstadt (DE)
(72) Erfinder: Buschardt, Boris, 85049 Ingolstadt (DE)
(74) Vertreter: Thielmann, Frank

(56) Entgegenhaltungen:
- US-A- 5 765 116

## Beschreibung

Die Erfindung betrifft eine Fahrerassistenzvorrichtung zur Assistenz eines Fahrers beim Fahren eines Fahrzeugs, wobei die Fahrerassistenzvorrichtung eine mit dem Fahrzeug mitgeführte Bildverarbeitungseinheit aufweist, durch die ein Verlauf einer mit dem Fahrzeug befahrenen Fahrbahn und damit auch eine jeweilige Position des Fahrzeugs auf der Fahrbahn erfaßbar ist, wobei aus den erfaßten Daten mindestens ein Kennwert ermittelbar ist, wobei die Fahrerassistenzvorrichtung weiterhin eine Lenkelementsteuereinheit aufweist, die dazu ausgelegt ist, aus dem mindestens einen Kennwert eine Sollgröße zu ermitteln und das Lenkelement entsprechend der Sollgröße anzusteuern. Die Erfindung betrifft auch ein entsprechendes Fahrerassistenzverfahren.

Beispielsweise von BMW wird unter der Bezeichnung "Heading Control" ein Assistenzbaustein in Fahrzeuge integriert, der die Technik der Bildverarbeitung nutzt. Die "Heading Control" soll einen Fahrer bei einer querdynamischen Führung und Stabilisierung eines Fahrzeugs unterstützen. Dazu werden aus gewonnenen Bildverarbeitungsdaten die Fahrbahn bzw. der Fahrspurverlauf in Vorausschau sowie der Gierwinkelfehler und die seitliche Abweichung des Fahrzeugs in der Fahrspur ermittelt. Daraus werden verschiedene Kennwerte berechnet, wie z.B. die Querabweichung in Vorausschau oder die Time-to-Line-Crossing (TLC). In Abhängigkeit von diesen Kennwerten erhält der Fahrer synthetische Lenkmomente bzw. Lenkmomentänderungen, die ihn bei der Querführung unterstützen sollen. Wenn der Fahrer also die Toleranzgrenze des als optimal errechneten Lenkverhaltens überschreitet, spürt er am Lenkrad leichte Zusatzkräfte, mit denen die notwendigen Lenkkorrekturen angedeutet werden. Nachteilig ist jedoch, daß der Mensch Lenkmomentänderungen prinzipiell erst oberhalb einer Wahrnehmungsschwelle von ca. 0,5 Nm wahrnimmt, so daß durch Lenkmomentänderungen nur massive Lenkkorrekturen vermittelt werden können. Außerdem empfindet der Mensch Lenkmomente oberhalb von 3 - 5 Nm, die über eine längere Zeit wirken, als unangenehm und physisch beanspruchend.

Aus der US 5,765,116 ist eine Fahrerassistensvorrichtung bekannt, welche gemäß oben ausgeführten Erläuterungen ausgebildet ist und in entsprechender Weise funktioniert. Diese bekannte Fahrerassistenzvorrichtung ermittelt mittels einer Videokamera Daten der Fahrbahn bzw. des Fahrspurverlaufs. Aus diesen Daten werden Kennwerte berechnet und in Abhängigkeit von diesen Kennwerten Lenkmomentänderungen erzeugt. Auch bei dieser bekannten Fahrerassistenzvorrichtung treten die oben erläuterten Nachteile auf.

Es ist daher Aufgabe der Erfindung, die gattungsgemäße Fahrerassistenzvorrichtung bzw. das gattungsgemäße Fahrerassistenzverfahren derart weiterzubilden, daß der Fahrer auch kleine Lenkkorrekturen wahrnehmen kann und auch über längere Zeit erfolgende Korrekturempfehlungen nicht als unangenehm empfindet.

Eine erste Lösung dieser Aufgabe stellt eine gattungsgemäße Fahrerassistenzvorrichtung dar, bei der die Sollgröße eine Lenkelementwinkeländerung ist. Im Gegensatz zum Stand der Technik ist bei der erfindungsgemäßen Fahrerassistenzvorrichtung eine Lenkelementsteuereinheit dazu ausgelegt, aus dem mindestens einen Kennwert eine Lenkelementwinkeländerung zu ermitteln und das Lenkelement entsprechend dieser Lenkelementwinkeländerung anzusteuern. Durch diese Lenkelementwinkeländerung erhält der Fahrer sehr viel direkter eine Information über den mindestens einen ermittelten Kennwert und die daraus resultierende Lenkkorrekturempfehlung, wobei auch eine verhältnismäßig kleine Lenkelementwinkeländerung, also nur eine geringfügige Lenkkorrekturempfehlung, durch den Fahrer leicht wahrgenommen werden kann. Durch die erfindungsgemäße Fahrerassistenzvorrichtung kann aufgrund der ebenfalls möglichen feinen Lenkkorrekturen eine bessere Querführung erreicht werden. Außerdem wird durch den Wegfall der Rückmeldung durch Änderung der Lenkmomente die physische Beanspruchung des Fahrers beim Lenken reduziert.

Dabei kann das Lenkelement durch die Lenkelementsteuereinheit entsprechend der Lenkelementwinkeländerung steuerbar oder regelbar sein.

Eine besonders vorteilhafte Weiterbildung der Erfindung sieht vor, daß die Bildverarbeitungseinheit eine Videokamera umfaßt. Idealerweise ist diese Videokamera im oberen Bereich der Frontscheibe angeordnet, so daß ein großer Bereich der Fahrbahn erfaßt werden kann.

Vorteilhafterweise kann in die Ermittlung des mindestens einen Kennwerts mindestens ein weiterer Betriebszustand des Fahrzeugs, insbesondere ein Radwinkel und/oder eine Fahrzeuggeschwindigkeit und/oder eine Giergeschwindigkeit, eingehen. Die genannten Größen können ohne Einsatz der Bildverarbeitungseinheit leicht ermittelt werden, da entsprechende Detektionssysteme in der Regel bereits im Fahrzeug vorhanden sind.

Der mindestens eine Kennwert kann einen Gierwinkelfehler und/oder eine Giergeschwindigkeit und/oder eine Querabweichung und/oder eine Querbeschleunigung und/oder eine Quergeschwindigkeit und/oder einen Schwimmwinkel und/oder eine Schwimmwinkeländerung und/oder eine Querabweichung in Vorausschau und/oder eine Time-to-Line-Crossing (TLC) umfassen. Alle diese Zustandsgrößen können einzeln oder in Kombination miteinander in der Lenkelementwinkeländerung des Lenkelements berücksichtigt werden.

In einer weiteren vorteilhaften Ausgestaltung der Erfindung ist die Lenkelementsteuereinheit derart ausgebildet, daß eine Lenkelementbewegung durch den Fahrer des Fahrzeugs entgegen der Ansteuerung durch die Lenkelementsteuereinheit verhindert wird. Dies kann beispielsweise dadurch realisiert werden, daß die Lenkelementsteuereinheit ein elektrisch betriebenes Schneckengetriebe umfaßt, so daß der Fahrer den Lenkradwinkel nicht gegen dieses Schneckengetriebe aktiv verstellen kann. Auf diese Weise wird verhindert, daß der Fahrer das Lenkelement entgegen den Lenkempfehlungen bewegt.

In einer weiteren vorteilhaften Ausgestaltung der Erfindung weist die Fahrerassistenzvorrichtung eine Lenkmomenterfassungseinheit zur Erfassung eines auf das Lenkelement vom Fahrer ausgeübten Lenkmoments auf. Folglich wird in dieser Ausgestaltung der Wille des Fahrers bzw. der Fahrerwunsch anhand der Krafteingabe am Lenkelement ermittelt.

Das erfaßte Lenkmoment kann dann auch in die Ermittlung des mindestens einen Kennwerts eingehen.

In einer weiteren Ausgestaltung der Erfindung ist das erfaßte Lenkmoment an ein Steuerelement übertragbar, wobei durch das Steuerelement aus dem Lenkmoment ein Soll-Lenkmoment oder ein Soll-Radwinkel ermittelbar ist, um dieses oder diesen auf Räder des Fahrzeugs zu übertragen. Folglich wird entsprechend des Fahrerwunschs ein Soll-Lenkmoment oder ein Soll-Radwinkel auf die Räder des Fahrzeugs übertragen.

In einer weiteren besonders vorteilhaften Weiterbildung der Erfindung geht mindestens ein Kennwert in die Ermittlung des Soll-Lenkmoments oder des Soll-Radwinkels durch das Steuerelement ein. Auf diese Weise können die Räder nicht nur gemäß dem Fahrerwunsch, sondern auch in Abhängigkeit des mindestens einen Kennwerts eingestellt werden, so daß eine erhöhte Fahrsicherheit gegeben ist, weil die Räder automatisch so eingestellt werden, daß die Fahrspur gehalten wird.

Eine weitere Ausgestaltung der Erfindung sieht vor, daß die Lenkelementsteuereinheit mit einem oder dem Steuerelement gekoppelt ist, wobei durch das Steuerelement aus einer ermittelten Radwinkelstellung ein Soll-Lenkelementwinkel ermittelbar ist, der von der Lenkelementsteuereinheit auf das Lenkelement übertragbar ist. Auf diese Weise erhält der Fahrer eine Rückmeldung über die Einstellung der Räder, die insbesondere durch das von ihm erzeugte Lenkmoment am Lenkelement verursacht wurde.

Vorteilhafterweise kann der Soll-Lenkelementwinkel durch die Lenkelementsteuereinheit entsprechend der aus dem mindestens einen Kennwert ermittelten Lenkelementwinkeländerung modifizierbar sein, wobei der modifizierte Soll-Lenkelementwinkel auf das Lenkelement übertragbar ist. Der Fahrer erhält damit gleichzeitig eine Rückmeldung über die Stellung der Räder und eine Lenkkorrekturempfehlung.

Eine zweite Lösung der obigen Aufgabe stellt ein Fahrerassistenzverfahren zur Assistenz eines Fahrers beim Fahren eines Fahrzeugs dar, das folgende Schritte umfaßt:
a) Erfassen eines Verlaufs einer mit dem Fahrzeug befahrenen Fahrbahn mit einer mit dem Fahrzeug mitgeführten Bildverarbeitungseinheit und damit auch Erfassen einer jeweiligen Position des Fahrzeugs auf der Fahrbahn;
b) Ermitteln mindestens eines Kennwerts aus den erfaßten Daten; und
c) Ermitteln einer Lenkelementwinkeländerung aus dem mindestens einen Kennwert und Verstellen des Lenkelementwinkels eines Lenkelements um die ermittelte Lenkelementwinkeländerung.

Außerdem können die bereits oben im Zusammenhang mit der erfindungsgemäßen Fahrerassistenzvorrichtung erwähnten Funktionen bei dem erfindungsgemäßen Fahrerassistenzverfahren vorgesehen sein.

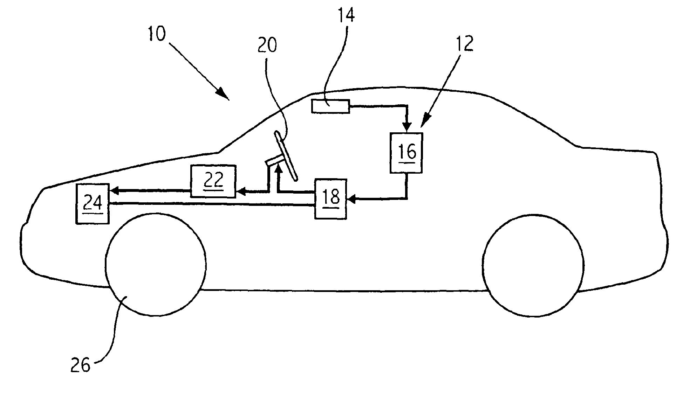

Weitere Vorteile gehen aus den im folgenden unter Hinweis auf die Zeichnung beschriebenen Ausführungsbeispielen hervor.
- Die Figur: zeigt eine Ausführungsform der erfindungsgemäßen Fahrerassistenzvorrichtung in einem Fahrzeug.

In der Figur ist eine Ausführungsform der Fahrerassistenzvorrichtung in einem Fahrzeug 10 dargestellt, wobei die Fahrerassistenzvorrichtung eine Bildverarbeitungseinheit 12 mit einer Videokamera 14 aufweist. Die Bildverarbeitungseinheit 12 umfaßt neben der Videokamera 14 eine Rechnereinheit 16, durch die aus den durch die Videokamera 14 erfaßten Fahrbahndaten mindestens ein Kennwert ermittelbar ist. Kennwerte können beispielsweise sein: eine Giergeschwindigkeit, eine Querabweichung, eine Querbeschleunigung, eine Quergeschwindigkeit, ein Schwimmwinkel, eine Schwimmwinkeländerung, eine Querabweichung in Vorausschau und/oder eine Time-to-Line Crossing (TLC). Die Fahrerassistenzvorrichtung umfaßt weiterhin eine Lenkelementsteuereinheit 18, die so mit der Rechnereinheit 16 verbunden ist, daß der mindestens eine Kennwert an die Lenkelementsteuereinheit 18 übertragen werden kann. Weiterhin ist die Lenkelementsteuereinheit 18 dazu ausgelegt, aus dem mindestens einen Kennwert eine Lenkelementwinkeländerung zu ermitteln und ein im Fahrzeug 10 vorhandenes Lenkrad 20 entsprechend der Lenkelementwinkeländerung anzusteuern. Obwohl unter Ansteuern in der vorliegenden Ausführungsform ein Steuern zu verstehen ist, kann die Lenkelementsteuereinheit 18 in einer alternativen Ausführungsform zum Regeln ausgelegt sein. Durch eine Lenkmomenterfassungseinheit 22 ist ein vom Fahrer auf das Lenkrad 20 ausgeübtes Lenkmoment erfaßbar. Das erfaßte Lenkmoment wird von der Lenkmomenterfassungseinheit 22 auf ein Steuerelement 24 übermittelt. Aus dem erfaßten Lenkmoment wird durch das Steuerelement 24 ein Soll-Lenkmoment ermittelt, das auf die Vorderräder 26 des Fahrzeugs 10 übertragen wird. In einer alternativen Ausführungsform geht in die Ermittlung des Soll-Lenkmoments durch das Steuerelement 24 auch mindestens ein Kennwert ein, der dem Steuerelement 24 durch die Lenkelementsteuereinheit 18 übermittelt wird. In einer weiteren alternativen Ausführungsform kann durch das Steuerelement 24 auch ein Soll-Radwinkel ermittelt werden, der dann auf die Vorderräder 26 übertragen wird. Der sich daraufhin einstellende Radwinkel kann wiederum durch das Steuerelement 24 erfaßt werden. Dieses ist so ausgelegt, daß aus dem erfaßten Radwinkel ein Soll-Lenkelementwinkel ermittelbar ist, der über die Lenkelementsteuereinheit 18 auf das Lenkrad 20 übertragen werden kann. Der Soll-Lenkelementwinkel kann durch die Lenkelementsteuereinheit 18 modifiziert werden, wenn hier mindestens ein bestimmter Kennwert anliegt, der eine Lenkkorrektur und damit eine Lenkelementwinkeländerung erforderlich macht.

Die erfindungsgemäße Fahrerassistenzvorrichtung dient vor allem dazu, den Fahrer auf Autobahnen und Landstraßen bei der Querführung und der Spurhaltung zu unterstützen. Aus dem erfaßten Fahrbahnverlauf und damit auch der erfaßten jeweiligen Position des Fahrzeugs auf der Fahrbahn werden deshalb vor allem Kennwerte ermittelt, die mit der Querführung und Spurhaltung zusammenhängen. Besonders wichtige Kennwerte sind unter anderem eine Querabweichung in Vorausschau oder eine Time-to-Line-Crossing (TLC).

Weitere Veränderungen, Modifikationen oder Kombinationen der oben beschriebenen Ausführungsformen sind für den Fachmann offensichtlich und fallen ebenso unter den Schutzumfang der beigefügten Ansprüche.

## Patentansprüche

1. Fahrerassistenzvorrichtung zur Assistenz eines Fahrers beim Fahren eines Fahrzeugs, wobei die Fahrerassistenzvorrichtung eine mit dem Fahrzeug (10) mitgeführte Bildverarbeitungseinheit (12) aufweist, durch die ein Verlauf einer mit dem Fahrzeug (10) befahrenen Fahrbahn und damit auch eine jeweilige Position des Fahrzeugs (10) auf der Fahrbahn erfaßbar ist, wobei aus den erfaßten Daten mindestens ein Kennwert ermittelbar ist, wobei die Fahrerassistenzvorrichtung weiterhin eine Lenkelementsteuereinheit (18) aufweist, die dazu ausgelegt ist, aus dem mindestens einen Kennwert eine Sollgröße zu ermitteln und das Lenkelement (20) entsprechend der Sollgröße anzusteuern,
**dadurch gekennzeichnet,**
**daß** die Sollgröße eine Lenkelementwinkeländerung ist.

2. Fahrerassistenzvorrichtung nach Anspruch 1,
**dadurch gekennzeichnet,**
**daß** das Lenkelement (20) durch die Lenkelementsteuereinheit (18) entsprechend der Lenkelementwinkeländerung steuerbar oder regelbar ist.

3. Fahrerassistenzvorrichtung nach einem der vorhergehenden Ansprüche,
**dadurch gekennzeichnet,**
**daß** die Bildverarbeitungseinheit (12) eine Videokamera (14) umfaßt.

4. Fahrerassistenzvorrichtung nach einem der vorhergehenden Ansprüche,
**dadurch gekennzeichnet,**
**daß** in die Ermittlung des mindestens einen Kennwerts mindestens ein weiterer Betriebszustand des Fahrzeugs (10), insbesondere ein Radwinkel und/oder eine Fahrzeuggeschwindigkeit und/oder eine Giergeschwindigkeit, eingeht.

5. Fahrerassistenzvorrichtung nach einem der vorhergehenden Ansprüche,
**dadurch gekennzeichnet,**
**daß** der mindestens eine Kennwert einen Gierwinkelfehler und/oder eine Giergeschwindigkeit und/oder eine Querabweichung und/oder eine Querbeschleunigung und/oder eine Quergeschwindigkeit und/oder einen Schwimmwinkel und/oder eine Schwimmwinkeländerung und/oder eine Querabweichung in Vorausschau und/oder eine Time-to-Line Crossing (TLC) umfaßt.

6. Fahrerassistenzvorrichtung nach einem der vorhergehenden Ansprüche,
**dadurch gekennzeichnet,**
**daß** die Lenkelementsteuereinheit (18) derart ausgebildet ist, daß eine Lenkelementbewegung durch den Fahrer des Fahrzeugs (10) entgegen der Ansteuerung durch die Lenkelementsteuereinheit (18) verhindert wird.

7. Fahrerassistenzvorrichtung nach Anspruch 6,
**dadurch gekennzeichnet,**
**daß** die Lenkelementsteuereinheit (18) ein elektrisch betriebenes Schneckengetriebe umfaßt.

8. Fahrerassistenzvorrichtung nach einem der vorhergehenden Ansprüche,
**dadurch gekennzeichnet,**
**daß** die Fahrerassistenzvorrichtung eine Lenkmomenterfassungseinheit (22) zur Erfassung eines auf das Lenkelement (20) von dem Fahrer ausgeübten Lenkmoments aufweist.

9. Fahrerassistenzvorrichtung nach Anspruch 8,
**dadurch gekennzeichnet,**
**daß** das erfaßte Lenkmoment in die Ermittlung des mindestens einen Kennwerts eingeht.

10. Fahrerassistenzvorrichtung nach einem der Ansprüche 8 oder 9,
**dadurch gekennzeichnet,**
**daß** das erfaßte Lenkmoment an ein Steuerelement (24) übertragbar ist, wobei durch das Steuerelement (24) aus dem Lenkmoment ein 3oll-Lenkmoment oder ein Soll-Radwinkel ermittelbar ist, um dieses oder diesen auf Räder (26) des Fahrzeugs (10) zu übertragen.

11. Fahrerassistenzvorrichtung nach Anspruch 10,
**dadurch gekennzeichnet,**
**daß** mindestens ein Kennwert in die Ermittlung des Soll-Lenkmoments oder des Soll-Radwinkels durch das Steuerelement (24) eingeht.

12. Fahrerassistenzvorrichtung nach einem der vorhergehenden Ansprüche,
**dadurch gekennzeichnet,**
**daß** die Lenkelementsteuereinheit (18) mit einem Steuerelement (24) gekoppelt ist, wobei durch ein oder das Steuerelement (24) aus einer ermittelten Radwinkelstellung ein Soll-Lenkelementwinkel ermittelbar ist, der von der Lenkelementsteuereinheit (18) auf das Lenkelement (20) übertragbar ist.

13. Fahrerassistenzvorrichtung nach Anspruch 12,
**dadurch gekennzeichnet,**
**daß** der Soll-Lenkelementwinkel durch die Lenkelementsteuereinheit (18) entsprechend der aus dem mindestens einen Kennwert ermittelten Lenkelementwinkeländerung modifizierbar ist, wobei der modifizierte Soll-Lenkelementwinkel auf das Lenkelement (20) übertragbar ist.

14. Fahrerassistenzverfahren zur Assistenz eines Fahrers beim Fahren eines Fahrzeugs, folgende Schritte umfassend:
a) Erfassen eines Verlaufs einer mit dem Fahrzeug (10) befahrenen Fahrbahn mit einer mit dem Fahrzeug (10) mitgeführten Bildverarbeitungseinheit (12) und damit auch Erfassen einer jeweiligen Position des Fahrzeugs (10) auf der Fahrbahn;
b) Ermitteln mindestens eines Kennwerts aus den erfaßten Daten; und
c) Ermitteln einer Lenkelementwinkeländerung aus dem mindestens einen Kennwert und Verstellen des Lenkelementwinkels eines Lenkelements (20) um die ermittelte Lenkelementwinkeländerung.

## Claims

1. Driver aid apparatus for aiding a driver driving a vehicle, the driver aid apparatus comprising an image-processing unit (12) carried on the vehicle (10) and capable of detecting the course-line of a carriageway along which the vehicle (10) is being driven and also the actual position of the vehicle (10) on the carriageway, at least one parameter being determinable from the detected data, [and] the driver aid apparatus also comprising a steering-element control unit (18) that is designed to determine a set value from the at least one parameter and to drive the steering element (20) in response to the set value,
**characterized in that**
the set value is a change in the angle of the steering element.

2. Driver aid apparatus according to Claim 1,
**characterized in that**
the steering element (20) can be controlled or regulated by the steering-element control unit (18) in response to the change in angle of the steering element.

3. Driver aid apparatus according to either of the preceding claims,
**characterized in that**
the image-processing unit (12) includes a video camera (14).

4. Driver aid apparatus according to any one of the preceding claims,
**characterized in that**
at least one further operating condition of the vehicle (10), in particular a wheel angle and/or a vehicle speed and/or a yaw velocity, is included in the determination of the at least one parameter.

5. Driver aid apparatus according to any one of the preceding claims,
**characterized in that**
the at least one parameter comprises a yaw-angle error and/or a yaw velocity and/or a course-line deviation and/or a lateral acceleration and/or a lateral velocity and/or a side-slip angle and/or a change in side-slip angle and/or a prospective course-line deviation and/or a time to line crossing (TLC).

6. Driver aid apparatus according to any one of the preceding claims,
**characterized in that**
the steering-element control unit (18) is designed to prevent steering-element movement by the driver of the vehicle (10) contrary to the drive by the steering-element control unit (18).

7. Driver aid apparatus according to Claim 6,
**characterized in that**
the steering-element control unit (18) comprises an electrically driven worm-gear.

8. Driver aid apparatus according to any one of the preceding claims,
**characterized in that**
the driver aid apparatus comprises a steering-torque detection unit (22) for detecting a steering torque exerted on the steering element (20) by the driver.

9. Driver aid apparatus according to Claim 8,
**characterized in that**
the detected steering torque is included in the determination of the at least one parameter.

10. Driver aid apparatus according to either of Claims 8 and 9,
**characterized in that**
the detected steering torque is transmissible to a control element (24), a required steering torque or required wheel angle being detectable from the steering torque for transmission to wheels (26) of the vehicle (10).

11. Driver aid apparatus according to Claim 10,
**characterized in that**
at least one parameter is included in the determination of the required steering torque or required wheel angle by the control element (24).

12. Driver aid apparatus according to any one of the preceding claims,
**characterized in that**
the steering-element control unit (18) is coupled with a control element (24), a required steering-element angle, transmissible by the steering-element control unit (18) to the steering element (20), being determinable by a or the control element (24) from a determined wheel-angle position.

13. Driver aid apparatus according to Claim 12,
**characterized in that**
the required steering-element angle is modifiable by the steering-element control unit (18) in response to the change of steering-element angle determined from the at least one parameter, the modified required steering-element angle being transmissible to the steering element (20).

14. Driver aid method for aiding a driver driving a vehicle, comprising the following steps:
a) detection of a course-line of a carriageway along which the vehicle (10) is being driven, using an image-processing unit (12) carried on the vehicle (10), and also detection of the actual position of the vehicle (10) on the carriageway;
b) determination of at least one parameter from the detected data; and
c) determination of a change in steering-element angle from the at least one parameter, and adjustment of the steering-element angle of a steering element (20) by the determined change in steering-element angle.

## Revendications

1. Dispositif d'assistance au conducteur pour assister un conducteur lors de la conduite d'un véhicule automobile, le dispositif d'assistance au conducteur présentant une unité de traitement d'image (12) ajoutée dans le véhicule automobile (10), grâce à laquelle un parcours sur une voie parcourue par le véhicule automobile (10) et par conséquent également une position respective du véhicule automobile (10) sur la voie sont détectables, au moins une valeur caractéristique étant déterminable à partir des données recensées, le dispositif d'assistance au conducteur présentant en outre une unité de commande de l'élément de conduite (18), qui est conçue pour déterminer une grandeur théorique à partir d'au moins une valeur caractéristique et pour commander l'élément de conduite (20) en fonction de la grandeur théorique,
**caractérisé en ce que**,
la grandeur théorique est une modification de l'angle de l'élément de conduite.

2. Dispositif d'assistance au conducteur conformément à la revendication 1,
**caractérisé en ce que**,
l'élément de conduite (20) peut être commandé ou ajusté par l'unité de commande de l'élément de conduite (18) en fonction de la modification de l'angle de l'élément de conduite.

3. Dispositif d'assistance au conducteur conformément à l'une des revendications précédentes,
**caractérisé en ce que**,
l'unité de traitement d'image (12) comprend une caméra vidéo (14).

4. Dispositif d'assistance au conducteur conformément à l'une des revendications précédentes,
**caractérisé en ce que**,
au moins un autre état de fonctionnement du véhicule automobile (10) - en particulier un angle de roue et / ou une vitesse du véhicule et / ou une vitesse d'embardée - intervient dans la détermination d'au moins une valeur caractéristique.

5. Dispositif d'assistance au conducteur conformément à l'une des revendications précédentes,
**caractérisé en ce que**,
la au moins une valeur caractéristique comprend un défaut d'angle d'embardée et / ou une vitesse d'embardée et / ou un écart transversal et / ou une accélération transversale et / ou une vitesse transversale et / ou un angle de dérive et / ou une modification de l'angle de dérive et / ou un écart transversal en prévision et / ou un temps à sortie de voie ( time to line crossing - TLC).

6. Dispositif d'assistance au conducteur conformément à l'une des revendications précédentes,
**caractérisé en ce que**,
l'unité de commande de l'élément de conduite (18) est réalisée de sorte qu'un mouvement de l'élément de conduite par le conducteur du véhicule automobile (10) contre la commande d'amorçage est empêché par l'unité de commande de l'élément de conduite (18).

7. Dispositif d'assistance au conducteur conformément à la revendication 6,
**caractérisé en ce que**,
l'unité de commande de l'élément de conduite (18) comprend une transmission par vis sans fin entraînée électriquement.

8. Dispositif d'assistance au conducteur conformément à l'une des revendications précédentes,
**caractérisé en ce que**,
le dispositif d'assistance au conducteur présente une unité de détection du couple de braquage (22) pour la détection d'un couple de braquage exercé sur l'élément de braquage (20) par le conducteur.

9. Dispositif d'assistance au conducteur conformément à la revendication 8,
**caractérisé en ce que**,
le couple de braquage détecté intervient dans la détermination d'au moins une valeur caractéristique.

10. Dispositif d'assistance au conducteur conformément à l'une des revendications 8 ou 9,
**caractérisé en ce que**,
le couple de braquage détecté est transmissible à un élément de commande (24), un couple de braquage théorique ou un angle de roue théorique étant déterminable par l'élément de commande (24) à partir du couple de braquage, afin de transférer ce dernier ou ces derniers aux roues (26) du véhicule automobile (10).

11. Dispositif d'assistance au conducteur conformément à la revendication 10,
**caractérisé en ce que**,
au moins une valeur caractéristique intervient dans la détermination du couple de braquage théorique ou de l'angle de roue théorique via l'élément de commande (24).

12. Dispositif d'assistance au conducteur conformément à l'une des revendications précédentes,
**caractérisé en ce que**,
l'unité de commande de l'élément de conduite (18) est accouplée avec un élément de commande (24), à l'occasion de quoi un angle théorique de l'élément de conduite est déterminable par un ou l'élément de commande à partir d'une position d'angle de roue déterminée, angle théorique qui est transmissible par l'unité de commande de l'élément de conduite (18) à l'élément de conduite (20).

13. Dispositif d'assistance au conducteur conformément à la revendication 12,
**caractérisé en ce que**,
l'angle théorique de l'élément de conduite est modifiable via l'unité de commande de l'élément de conduite (18) conformément à la modification de l'angle de l'élément de conduite déterminé à partir d'au moins une valeur caractéristique, à l'occasion de quoi l'angle théorique de l'élément de conduite modifié est transmissible à l'élément de conduite (20).

14. Procédé d'assistance au conducteur pour assister un conducteur lors de la conduite d'un véhicule automobile, comprenant les étapes suivantes :
a) détermination d'un trajet sur une voie parcourue par le véhicule automobile (10) avec une unité de traitement d'image (12) ajoutée au véhicule automobile (10) et, par conséquent, détection également d'une position respective du véhicule automobile (10) sur la voie ;
b) détermination d'au moins une valeur caractéristique à partir des données recensées, et
c) détermination d'une modification de l'angle de l'élément de conduite à partir d'au moins une valeur caractéristique et réglage de l'angle d'élément de conduite d'un élément de conduite (20) correspondant à la modification d'angle de l'élément de conduite déterminée.
